# FASCICULE DE BREVET EUROPEEN

(11) **EP 1 786 586 B1**
(45) Date de publication et mention de la délivrance du brevet: **11.03.2009**
(21) Numéro de dépôt: 05778794.7
(22) Date de dépôt: 22.06.2005
(51) Int. Cl.: B23K 1/20, B23K 1/08

(54) **PROCEDE DE BRASAGE DE PIECES EN MATERIAU COMPOSITE**
VERFAHREN ZUM LÖTEN VON VERBUNDMATERIALTEILEN
METHOD FOR SOLDERING COMPOSITE MATERIAL PARTS

(30) Priorité: 24.06.2004 FR 0406892
(43) Date de publication de la demande: 23.05.2007
(73) Titulaire: Snecma Propulsion Solide, 33187 Le Haillan Cedex (FR)
(72) Inventeur: BOUILLON, Eric, F-33185 LE HAILLAN (FR); JIMENEZ, Sébastien, F-33300 BORDEAUX (FR); THEBAULT, Jacques, F-33200 BORDEAUX (FR)
(74) Mandataire: Desormiere, Pierre-Louis
(86) Numéro de dépôt international: PCT/FR2005/001566
(87) Numéro de publication internationale: WO 2006/010814

(56) Documents cités:
- PATENT ABSTRACTS OF JAPAN vol. 004, no. 096 (M-020), 11 juillet 1980 (1980-07-11) & JP 55 054262 A (HITACHI LTD), 21 avril 1980 (1980-04-21)

## Description

L'invention concerne l'assemblage par brasage des matériaux composites themostructuraux et notamment les matériaux composites à matrice céramique (CMC). Les matériaux CMC sont typiquement formés d'un substrat poreux, tel qu'un substrat fibreux poreux densifié par une matrice céramique. Les fibres du substrat peuvent être en carbone ou céramique. La matrice est en une céramique réfractaire telle que, par exemple, carbure, nitrure, borure ou oxyde réfractaire. Les matériaux CMC, comme, par exemple, les composites C/SiC (renfort en fibres de carbone et matrice en carbure de silicium), sont remarquables par leurs propriétés mécaniques, qui les rendent aptes à constituer des éléments de structure, et par leur capacité à conserver ces propriétés à des températures élevées.

Lors de la réalisation de structures en matériaux composites à matrice céramique, il est fréquent de réaliser celles-ci à partir d'éléments en matériaux CMC indépendants qui sont assemblés entre eux par brasage. Toutefois, le brasage des matériaux composites à matrice céramique est techniquement difficile. En effet, ces matériaux présentent une forte rugosité en surface et comportent des phases oxydes. La réalisation d'un joint de brasure n'est possible qu'à condition que ces phases oxydes soient éliminées. A cet effet, on utilise généralement des compositions ou alliages de brasure à base de silicium nécessitant un traitement thermique à des températures supérieures à 1200 °C. Cependant, à de telles températures et au-delà, l'élimination des phases oxydes présentes dans le matériau entraîne la formation d'espèces gazeuses.

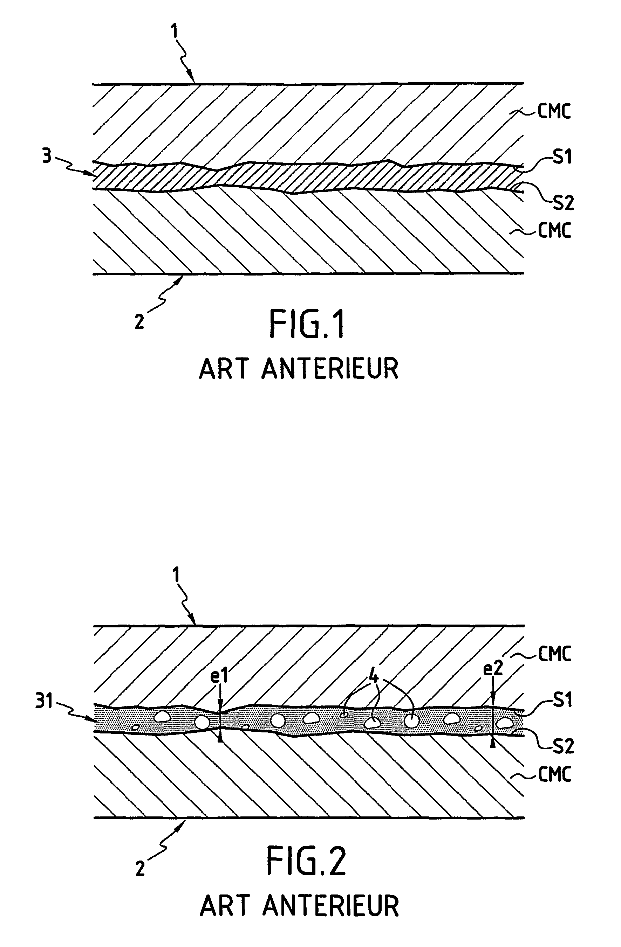

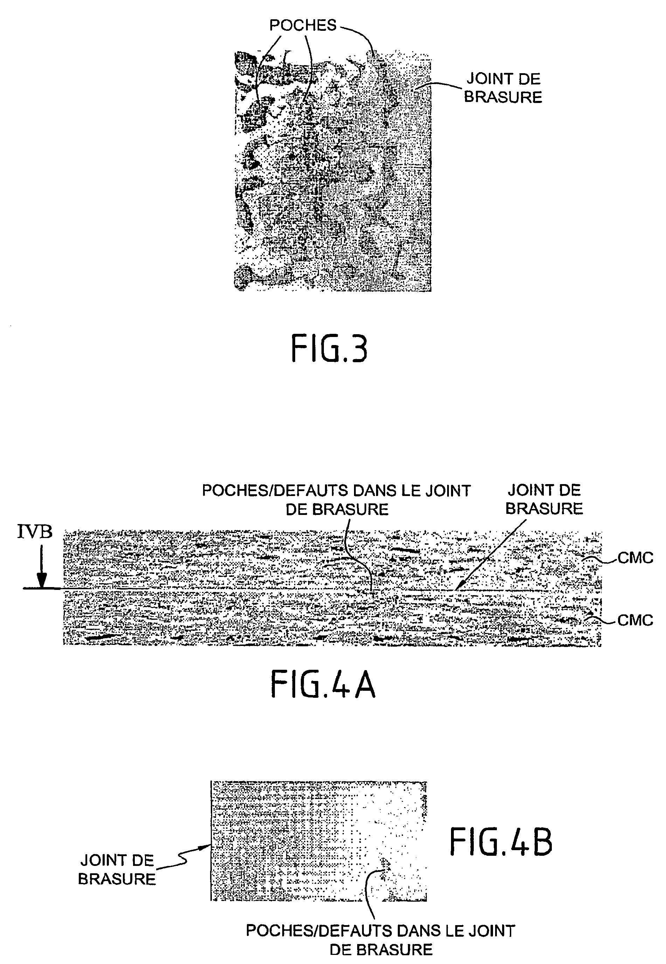

La figure 1 illustre très schématiquement deux pièces 1 et 2 en matériau composite CMC dont les surfaces S1 et S2 sont destinées à être assemblées entre elles par la technique de brasage habituelle, à savoir par interposition d'une couche de brasure solide 3 entre les surfaces des deux pièces à accoler. La couche de brasure solide 3 est ensuite fondue par traitement thermique de manière à former un joint de brasure 31 reliant les surfaces S1 et S2 des deux pièces comme illustré sur la figure 2. Cependant, avec cette technique de brasage, une partie des espèces gazeuses dégagées par la désoxydation du matériau sont emprisonnées à l'intérieur du joint de brasure, ce qui conduit à un joint de brasure poreux dans lequel subsistent localement des portions 4 sans brasure entre les deux surfaces. Ce manque de matière entraîne des défauts dans la liaison entre les deux pièces et, par conséquent, une dégradation de la qualité de l'assemblage tel qu'illustré à la figure 3 qui montre l'état d'un joint de brasure obtenu avec le procédé de brasage standard décrit précédemment. Sur la figure 3, on peut voir que la distribution de brasure n'est pas uniforme du fait de la subsistance de poches d'espèces gazeuses dans le joint de brasure qui fragilise la liaison réalisée.

Ces résultats peuvent être améliorés notamment par une maîtrise rigoureuse des paliers lors de la montée en température de manière à respecter un palier de désoxydation avant d'atteindre le palier de brasage. Un agent anti-mouillant peut en outre être utilisé pour "forcer" le passage de la brasure dans le joint. Les figures 4A et 4B (coupe NB de la figure 4A) montrent un joint de brasure obtenu entre deux pièces en CMC. On constate une nette amélioration de la qualité du joint par rapport à celui de la figure 3 par exemple. Cependant, même avec cette meilleure maîtrise du procédé de brasage, quelques poches subsistent encore entraînant des défauts dans le joint de brasure.

Par ailleurs, ces techniques de brasage ne permettent pas de contrôler l'épaisseur du joint de brasure. En effet, même avec des plans d'accostage rodés, l'épaisseur du joint de brasure obtenu peut varier en raison du manque d'uniformité dans la répartition de la brasure lors du traitement thermique. Ces variations d'épaisseurs dans le joint de brasure sont encore accentuées lorsque les plans d'accostage présentent des irrégularités (épaisseurs e1 et e2 sur la figure 2).

Par ailleurs, il est connu du document JP-A-55054262 de promouvoir la répartition de la brasure dans un joint large en mélangeant à la brasure une poudre métallique ne fondant pas à la temperature de brasage.

### Objet et résumé de l'invention

L'invention a pour but de fournir un procédé permettant un assemblage par brasage entre des pièces qui ne présente pas les inconvénients précités, notamment qui permet l'évacuation des espèces gazeuses produites lors du traitement thermique ainsi que la maîtrise de l'épaisseur du joint de brasure et du contact de ce joint avec les surfaces brasées.

Ce but est atteint avec un procédé dans lequel, conformément à l'invention, on interpose entre les deux surfaces des pièces à accoler une armature formée d'une texture fibreuse réfractaire, l'armature étant au moins partiellement en contact avec une composition de brasure, et on procède à un traitement thermique pour liquéfier la composition de brasure de manière à répartir par capillarité la composition de brasure fondue sur toute la surface de brasage entre les deux pièces couverte par l'armature.

Ainsi, la porosité de la texture fibreuse de l'armature permet d'apporter par capillarité la brasure sur toute la surface couverte par l'armature tout en facilitant l'évacuation des espèces gazeuses produites lors de la montée en température.

En outre, l'utilisation d'une telle armature permet de maîtriser l'épaisseur finale du joint de brasure. En effet, en sélectionnant l'épaisseur de l'armature, il est possible de contrôler l'épaisseur finale du joint de brasure de façon reproductible et précise. Grâce à sa souplesse, l'armature permet également de maîtriser le contact avec les surfaces à braser même lorsque celles-ci présentent des irrégularités. On assure ainsi un contact continu du joint de brasure avec les surfaces brasées permettant d'obtenir une liaison uniforme et de bonne qualité entre les pièces.

L'armature peut être formée d'une texture comprenant des fibres de carbone ou des fibres à précurseur de carbone ou de céramique dont le carbure de silicium (SiC).

Selon un aspect de l'invention, la composition de brasure est placée en contact avec au moins une partie de l'armature à l'extérieur de la zone d'accostage des surfaces de pièces à braser. Lors de la montée en température, la brasure fondue est transportée par capillarité entre les surfaces des pièces à braser sur toute la surface couverte par l'armature.

L'armature peut être découpée aux dimensions et aux formes des surfaces des pièces à braser. Elle est facilement manipulable et se conforme à toutes les géométries des pièces à braser. Ainsi, la zone sur laquelle on souhaite former le joint de brasure peut être facilement définie à l'avance à partir de la zone couverte par l'armature. Il est alors possible de former des joints de brasure solides sur tout type de surfaces, et ce de manière précise et reproductible.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1 montre très schématiquement le brasage de deux pièces en matériau composite à matrice céramique selon la technique antérieure,
- la figure 2 montre très schématiquement le résultat obtenu après brasage des deux pièces de la figure 1 ;
- la figure 3 est une vue en coupe d'un joint de brasure obtenu selon la technique antérieure ;
- les figures 4A et 4B montrent un joint de brasure obtenu selon un procédé de brasure de l'art antérieur ;
- la figure 5 est un ordinogramme montrant des étapes successives d'un mode de mise oeuvre d'un procédé selon l'invention;
- la figure 6 est un schéma illustrant la mise en oeuvre d'une opération de brasage avec une armature sèche conformément à un mode de mise en oeuvre du procédé de l'invention ;
- la figure 7 est un schéma montrant le résultat obtenu après brasage des deux pièces de la figure 6 ;
- les figures 8A et 8B montrent un joint de brasure obtenu avec le procédé de brasage selon l'invention ;
- les figures 9A, 9B et 9C illustrent la réalisation d'une portion de structure d'échangeur thermique par brasage de deux pièces conformément au procédé de l'invention ; et
- la figure 10 illustre un exemple d'assemblage entre une pièce plane et une pièce en forme de nid d'abeille.

### Description détaillée de mode de réalisation

La méthode d'assemblage par brasage selon la présente invention s'applique à tout type de matériau composite thermostructural à matrice céramique (CMC), c'est-à-dire à tout matériau formé d'un renfort en fibres réfractaires (carbone ou céramique) densifié par une matrice céramique elle aussi réfractaire, tels que des matériaux C/SiC, SiC/SiC, C/C-SiC, etc. Cette méthode s'applique en outre à d'autres types de matériaux susceptibles de dégager des espèces gazeuses lors du brasage tels que les matériaux C/C ou les céramiques monolithiques.

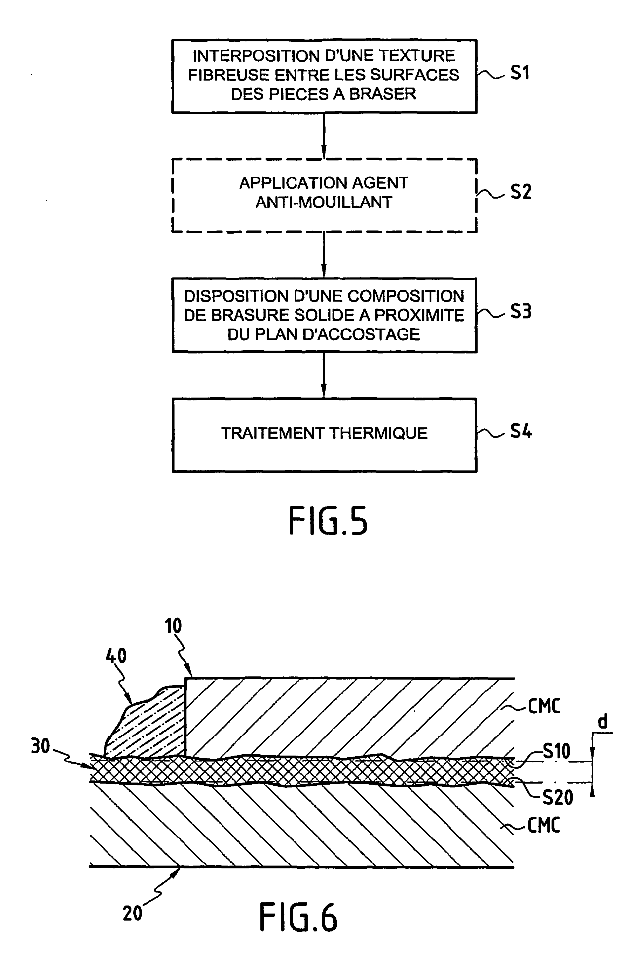

En référence aux figures 5 et 6, un mode de mise en oeuvre d'un procédé conforme à l'invention, pour l'assemblage par brasage de deux pièces 10 et 20 en matériau CMC, comprend les étapes suivantes.

Comme illustré sur la figure 6, la première étape (étape S1) consiste à disposer, entre la surface S10 d'une première pièce 10 en matériau composite CMC et la surface S20 d'une deuxième pièce 20 aussi en matériau CMC, une armature 30 « sèche » (i.e. non imprégnée) formée d'une texture en fibre de carbone ou précurseur de carbone. D'une manière générale, tout type de texture formée à partir de fibres de carbone ou de précurseur de carbone ou de céramique tel que du SiC permettant de transporter la composition de brasure par capillarité et présentant une porosité suffisante pour permettre l'évacuation des espèces gazeuses produites peut être utilisée en tant qu'armature pour le brasage selon la présente invention. L'armature peut être, par exemple, formée d'un mat (i.e. fibres en vrac agglomérées) éventuellement aiguilleté, d'un tissu, d'un feutre, d'une texture 2D, d'une nappe unidirectionnelle ou multidirectionnelle, etc.

De façon optionnelle (étape S2), un agent anti-mouillant peut être déposé sur les zones des pièces qui ne sont pas destinées à être brasées (ex. faces et tranches non couvertes par l'armature) afin de maîtriser le flux de brasure pour qu'il ne mouille que l'armature couvrant les zones des pièces devant être brasées. L'agent anti-mouillant utilisé peut être par exemple du nitrure de bore (BN) conditionné sous forme d'un aérosol, les produits dits « Stop-Off » tels que l'agent anti-mouillant Stopyt® commercialisé par la société Wesgo Metals ou les produits Nicrobraz® distribués par la société Wall Colmonoy Limited.

L'étape suivante (étape S3) consiste à placer une composition de brasure 40 en contact avec une partie (ou plusieurs) partie(s) de l'armature 30 qui dépasse à l'extérieur du plan d'accostage des deux pièces. Pour la composition de brasure, on utilise par exemple des compositions de silicium ou à base de silicium telles que décrites dans les demandes de brevet EP 806 402 ou US 5 975 407, des alliages de silicium+siliciures métalliques, du silicium+germanium allié ou non, ainsi que des compositions métalliques connues sous le nom commercial Cusil-ABA®, Ticusil®, Incusil® ou Brasic®. Le choix de la composition de brasure est effectué notamment en fonction de sa compatibilité avec le matériau des pièces, c'est-à-dire qu'on choisit de préférence une composition non réactive ou à réactivité contrôlée avec ce matériau.

On élève ensuite la température jusqu'à rendre liquide la composition de brasure 40 qui est alors aspirée par capillarité par l'armature 30 et répartie sur toute la surface de brasage entre les deux pièces couverte par l'armature (étape S4). Les espèces gazeuses produites lors de ce traitement thermique sont évacuées à travers les porosités de l'armature empêchant ainsi la formation de poches de gaz dans le joint de brasure. Le front de brasure qui avance dans l'armature repousse les espèces gazeuses qui circulent à travers les porosités de l'armature jusqu'à une extrémité de celle-ci où elles sont évacuées vers l'extérieur.

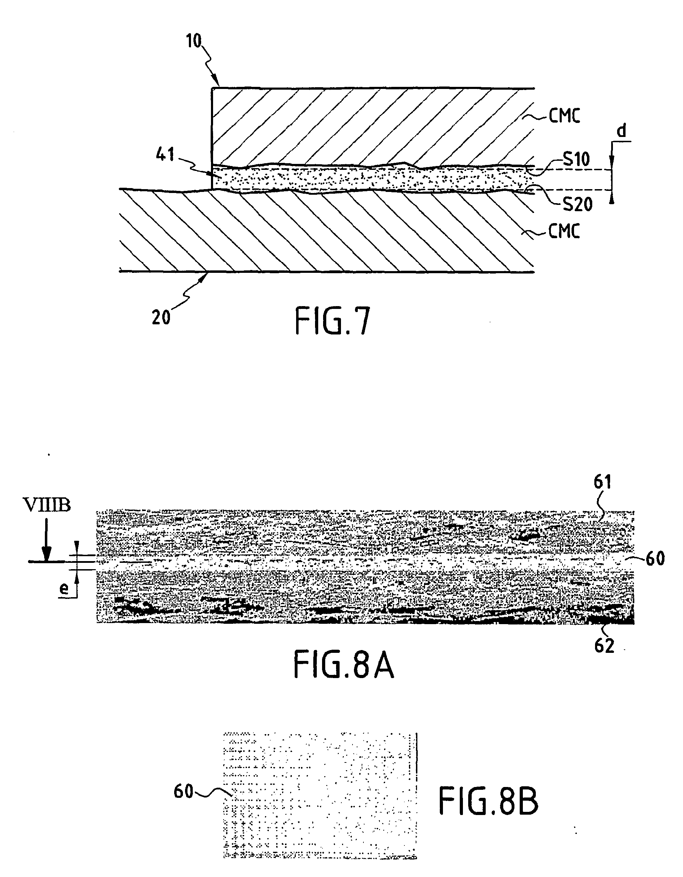

Comme illustré très schématiquement sur la figure 7, on obtient ainsi un joint de brasure 41 en contact continu avec les surfaces S10 et S20 des deux pièces. En outre, grâce à l'utilisation de l'armature selon l'invention, l'épaisseur finale du joint de brasure peut être contrôlée. En effet, conformément au procédé de l'invention, on interpose une armature de texture fibreuse entre les surfaces des pièces à braser. L'espace entre ces surfaces est, par conséquent, défini par l'épaisseur de l'armature utilisée qui fait partie intégrante du joint de brasure résultant. Ainsi, l'épaisseur finale du joint de brasure peut être déterminée en fonction du choix de l'épaisseur de l'armature utilisée.

Par ailleurs, l'utilisation d'une telle armature permet de garantir une épaisseur minimale du joint de brasure, et ce même lorsque les plans d'accostage présentent des irrégularités. En effet, tel qu'illustré sur la figure 6, les surfaces S10 et S20 sont maintenues espacées l'une de l'autre d'une distance minimale d définie par l'armature 30. L'espacement entre les deux surfaces varie légèrement à partir de cette distance minimale en fonction de l'importance des irrégularités présentes sur les surfaces. Par conséquent, en fonction de l'épaisseur de l'armature et, éventuellement, de sa compressibilité, on peut définir au départ une épaisseur minimale du joint de brasure indépendamment de l'état de surface des pièces à accoler qui est conservée après le brasage (distance d sur la figure 7).

Grâce à sa souplesse, l'armature épouse les rugosités de surface, ce qui permet de maîtriser le contact avec les surfaces à braser et de former du joint de brasure continu sur toutes les surfaces brasées.

Les figures 8A et 8B (coupe VIIIB de la figure 8A) montrent un joint de brasure 60 obtenu avec le procédé décrit précédemment et appliqué à la liaison de deux pièces 61 et 62 en matériau CMC. L'armature utilisée est formée d'un mat de fibres de carbone. On constate qu'il n'y a aucune poche résiduelle de gaz emprisonnée dans le joint, les parties sombres présentes dans le joint correspondant à des grains de SiC formés par réaction entre le carbone de l'armature et la brasure. Le joint de brasure 60 présente une épaisseur e uniforme sur toute sa longueur.

L'utilisation d'une armature conformément à l'invention présente encore l'avantage de former un support de diffusion pour la brasure qui s'adapte facilement à toutes les géométries de pièces. En effet, l'armature est déformable et facile à découper. Elle peut, par conséquent, être découpée aux dimensions et aux formes des surfaces à braser et se conformer à la géométrie des pièces (pièces non planes).

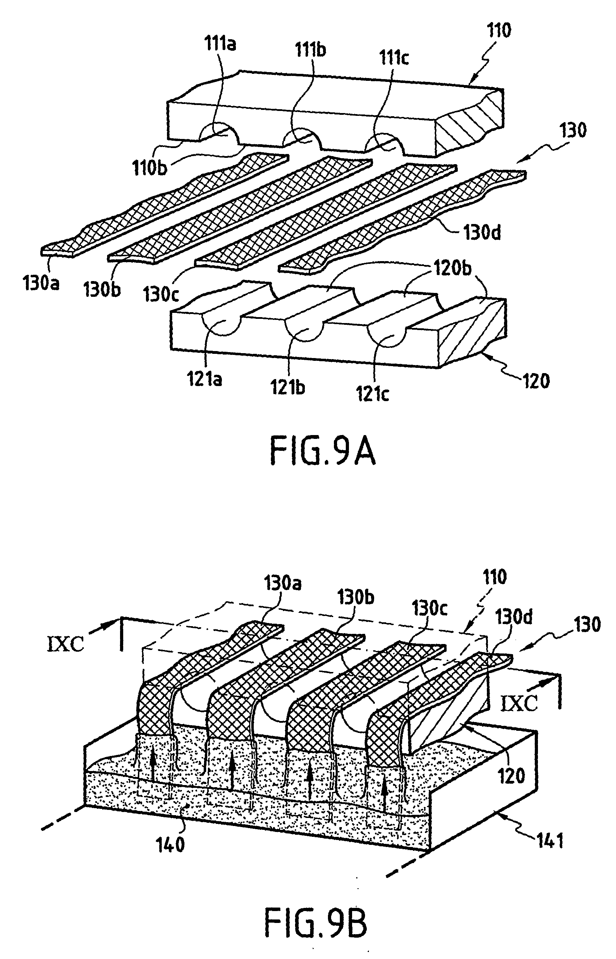

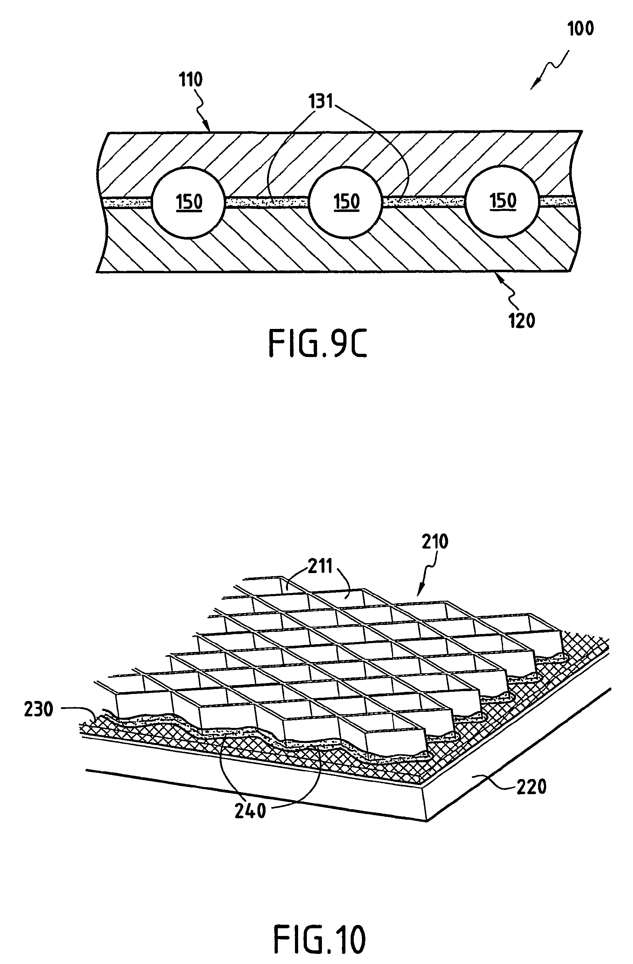

Les figures 9A, 9B et 9C illustrent un exemple de réalisation d'une structure obtenue par assemblage de deux panneaux 110 et 120 en matériau CMC (figure 9A) et formant, en l'espèce, une portion d'une structure 100 d'échangeurs thermiques (figure 9C) comme ceux mis en oeuvre dans les parois de divergent de tuyère de propulseur refroidie par circulation de fluide.

Les panneaux 110 et 120 présentent chacun des rainures ou évidements 111a, 111b, 111c et 121a, 121b, 121c destinés à constituer des canaux de circulation pour un fluide de refroidissement de la structure. Les évidements 111a-111c et 121a-121c respectivement des panneaux 110 et 120 délimitent deux surfaces de brasage indépendantes par panneau (110b pour le panneau 110 et 120b pour le panneau 120).

Conformément à la présente invention, on interpose une armature sèche 130 entre les surfaces des panneaux destinées à être accolées pour former le circuit de circulation de fluide. Comme illustré sur la figure 9B, l'armature 130 est formée en plusieurs parties 130a, 130b, 130c et 130d découpées aux dimensions et à la forme des parties des panneaux destinées à être accolées.

Comme illustré sur la figure 9B, les deux surfaces des panneaux sont accolées avec interposition des parties 130a-130d de l'armature 130 sur les zones de contact et dont une extrémité est immergée dans un creuset 141 contenant une composition de brasure 140. On élève ensuite la température jusqu'à rendre liquide la composition de brasure 140 qui est alors aspirée par capillarité par les parties 130a-130d de l'armature 130 et répartie sur toute la surface de brasage entre les deux pièces couverte par ces dernières.

On obtient alors, telle qu'illustré en figure 9C, une structure 100 qui comprend des canaux de circulation de fluide 150 séparés par un joint de brasure 131 uniquement présent sur les zones couvertes par les parties 130a-130d de l'armature 130.

Le procédé de brasage de la présente invention est particulièrement bien adapté pour l'assemblage de pièces présentant des formes complexes et/ou hétérogènes. Comme illustré sur la figure 10, il permet, par exemple, de réaliser facilement l'assemblage d'une pièce pleine 220 avec une pièce 210 en forme de nid d'abeille ou gaufrée qui comporte une pluralité d'alvéoles 211. Avec un procédé de brasure standard, l'assemblage de ces pièces s'avère particulièrement difficile en raison de la difficulté de disposer uniformément la brasure entre la pièce pleine 220 et les bords inférieurs des alvéoles 211, seules parties de la pièce 210 pouvant être accolées sur la pièce 220. Avec le procédé de l'invention, l'opération d'assemblage par brasage est grandement facilitée par l'utilisation d'une armature 230 sèche qui permet de déposer grossièrement une composition de brasure solide 240 autour et/ou dans les alvéoles 211, l'armature 230 assurant, lors de la montée en température, une diffusion uniforme de la brasure sur toutes les zones de contact entre les pièces 210 et 220, à savoir entre les bords inférieurs des flancs des alvéoles 211 et la surface de la pièce 220.

## Revendications

1. Procédé d'assemblage par brasage de deux pièces (10, 20) **caractérisé en ce que** l'on interpose entre les deux surfaces (S10, S20) des pièces à accoler une armature (30) formée d'une texture fibreuse réfractaire, ladite armature étant au moins partiellement en contact avec une composition de brasure (40), et on procède à un traitement thermique pour liquéfier la composition de brasure (40) de manière à répartir par capillarité la composition de brasure fondue sur toute la surface de brasage entre les deux pièces (10, 20) couverte par l'armature (30).

2. Procédé selon la revendication 1, **caractérisé en ce qu'**au moins une des deux pièces (10; 20) est en matériau composite à matrice céramique, ou en matériau composite C/C, ou en matériau céramique monolithique.

3. Procédé selon la revendication 1, **caractérisé en ce que** l'armature (30) est formée d'une texture comprenant des fibres de carbone ou des fibres en un matériau précurseur de carbone ou de céramique.

4. Procédé selon l'une quelconque des revendications 1 à 3, **caractérisé en ce que** l'on place la composition de brasure (40) en contact avec au moins une partie de l'armature (30) à l'extérieur de la zone d'accostage des surfaces (S10, S20) des pièces à braser.

5. Procédé selon la revendication 4, **caractérisé en que** l'on place la composition de brasure (140) dans un creuset (141), la composition de brasure étant transportée par capillarité par l'armature (130) entre les surfaces (110b, 120b) des pièces (110, 120) à accoler lors du traitement thermique.

6. Procédé selon l'une quelconque des revendications 1 à 5, **caractérisé en ce que** l'on sélectionne l'épaisseur de l'armature (30; 130) en fonction de l'épaisseur du joint de brasure à former.

7. Procédé selon l'une quelconque des revendications 1 à 6, **caractérisé en ce que** l'on découpe l'armature (30; 130) aux dimensions et aux formes des surfaces des pièces à braser.

8. Procédé selon l'une quelconque des revendications 1 à 7, **caractérisé en ce que**, avant l'étape de traitement thermique, on applique un agent anti-mouillant sur les parties des pièces qui ne sont pas destinées à être brasées.

9. Procédé selon l'une quelconque des revendications 1 à 8, **caractérisé en ce qu'**une (210) des deux pièces (210, 220) à assembler présente une forme en nid d'abeille ou gaufrée.

10. Procédé selon l'une quelconque des revendications 1 à 9, **caractérisé en ce que** la composition de brasure (40; 140; 240) est une composition de silicium, ou à base de silicium, ou d'alliages de silicium, ou une composition métallique.

## Claims

1. A method of brazing together two parts (10, 20), the method being **characterized in that** a pad (30) is interposed between the two surfaces (S10, S20) of the parts that are to be joined together, said pad being formed by a refractory fiber texture, and being at least in part in contact with a brazing composition (40), and heat treatment is performed to liquefy the brazing composition (40) so as to cause the molten brazing composition to be distributed by capillarity over the entire brazing area between the two parts (10, 20) covered by the pad (30).

2. A method according to claim 1, **characterized in that** at least one of the two parts (10, 20) is made of a ceramic matrix composite material, or a C/C composite material, or of a monolithic ceramic material.

3. A method according to claim 1, **characterized in that** the pad (30) is formed by a texture comprising carbon fibers, or by fibers of a carbon-precursor material, or by ceramic fibers.

4. A method according to any one of claims 1 to 3, **characterized in that** the brazing composition (40) is placed in contact with at least a portion of the pad (30) outside the docking zones of the surfaces (S10, S20) of the parts to be brazed together.

5. A method according to claim 4, **characterized in that** the brazing composition (140) is placed in a crucible (141), the brazing composition being transported by capillarity by the pad (130) between the surfaces (110b, 120b) of the parts (110, 120) that are to be joined together during the heat treatment.

6. A method according to any one of claims 1 to 5, **characterized in that** the thickness of the pad (30; 130) is selected as a function of the thickness of the brazed joint to be formed.

7. A method according to any one of claims 1 to 6, **characterized in that** the pad (30; 130) is cut to the dimensions and to the shapes of the surfaces of the parts for brazing together.

8. A method according to any one of claims 1 to 7, **characterized in that**, prior to the heat treatment step, an anti-wetting agent is applied to those portions of the parts that are not to be brazed together.

9. A method according to any one of claims 1 to 8, **characterized in that** one (210) of the two parts (210, 220) for assembling together is in the form of a honeycomb or a waffle.

10. A method according to any one of claims 1 to 9, **characterized in that** the brazing composition (40; 140; 240) is a silicon composition or a silicon-based composition, or a silicon alloy-based composition, or a metallic composition.

## Patentansprüche

1. Verfahren zum Verbinden von zwei Teilen (10, 20) durch Löten, **dadurch gekennzeichnet, daß** zwischen den beiden Flächen (S10, S20) der aneinanderzufügenden Teile eine von einer feuerfesten Faserstruktur gebildete Bewehrung (30) angeordnet wird, wobei die Bewehrung wenigstens teilweise mit einer Lötzusammensetzung (40) in Kontakt ist, und eine Wärmebehandlung durchgeführt wird, um die Lötzusammensetzung (40) so zu verflüssigen, daß die geschmolzene Lötzusammensetzung durch Kapillarwirkung über die gesamte mit der Bewehrung (30) bedeckte Lötfläche zwischen den beiden Teilen (10, 20) verteilt wird.

2. Verfahren nach Anspruch 1, **dadurch gekennzeichnet, daß** wenigstens eines der beiden Teile (10; 20) aus Keramikmatrix-Verbundwerkstoff oder aus C/C-Verbundwerkstoff oder aus monolithischem Keramikmaterial besteht.

3. Verfahren nach Anspruch 1, **dadurch gekennzeichnet, daß** die Bewehrung (30) von einer Struktur gebildet ist, die Kohlenstoffasern oder Fasern aus einem Kohlenstoff- oder Keramikvorläufermaterial aufweist.

4. Verfahren nach einem der Ansprüche 1 bis 3, **dadurch gekennzeichnet, daß** die Lötzusammensetzung (40) mit wenigstens einem Teil der Bewehrung (30) außerhalb des Berührungsbereichs der Flächen (S10, S20) der zu lötenden Teile in Kontakt gebracht wird.

5. Verfahren nach Anspruch 4, **dadurch gekennzeichnet, daß** die Lötzusammensetzung (140) in eine Wanne (141) eingebracht wird, wobei die Lötzusammensetzung während der Wärmebehandlung durch Kapillarwirkung über die Bewehrung (130) zwischen den Flächen (110b, 120b) der aneinanderzufügenden Teile (110, 120) befördert wird.

6. Verfahren nach einem der Ansprüche 1 bis 5, **dadurch gekennzeichnet, daß** die Dicke der Bewehrung (30; 130) in Abhängigkeit der Dicke der zu bildenden Lötnaht gewählt wird.

7. Verfahren nach einem der Ansprüche 1 bis 6, **dadurch gekennzeichnet, daß** die Bewehrung (30; 130) auf die Abmessungen und die Formen der Flächen der zu lötenden Teile zugeschnitten wird.

8. Verfahren nach einem der Ansprüche 1 bis 7, **dadurch gekennzeichnet, daß** vor dem Schritt der Wärmebehandlung ein Benetzungsschutzmittel auf die Bereiche der Teile aufgebracht wird, die nicht dazu bestimmt sind, gelötet zu werden.

9. Verfahren nach einem der Ansprüche 1 bis 8, **dadurch gekennzeichnet, daß** eines (210) der beiden zu verbindenden Teile (210, 220) eine Waben- oder Waffelform aufweist.

10. Verfahren nach einem der Ansprüche 1 bis 9, **dadurch gekennzeichnet, daß** die Lötzusammensetzung (40; 140; 240) eine Zusammensetzung aus Silizium oder auf Siliziumbasis oder aus Siliziumlegierungen oder eine Metallzusammensetzung ist.
